**Europäisches Patentamt**

(19) **European Patent Office**

**Office européen des brevets**

(11) Numéro de publication: **0 139 952**

**B1**

(12) # FASCICULE DE BREVET EUROPÉEN

(45) Date de publication du fascicule du brevet:
**12.08.87**

(21) Numéro de dépôt: **84109717.3**

(22) Date de dépôt: **16.08.84**

(51) Int. Cl.⁴: **A 23 L 1/20,** A 23 L 1/187,
A 23 L 1/04

(54) **Procédé de fabrication d'une gelée de soja.**

(30) Priorité: **21.09.83 CH 5128/83**

(43) Date de publication de la demande:
**08.05.85 Bulletin 85/19**

(45) Mention de la délivrance du brevet:
**12.08.87 Bulletin 87/33**

(84) Etats contractants désignés:
**AT BE CH DE FR IT LI LU NL SE**

(56) Documents cité:
**US-A-4 000 326**

**PATENTS ABSTRACTS OF JAPAN, vol. 4, no. 38(C-4)(520), 27 mars 1980, page 113C4**

(73) Titulaire: **SOCIETE DES PRODUITS NESTLE S.A.,**
**Case postale 353, CH- 1800 Vevey (CH)**

(72) Inventeur: **Hugelshofer, Alison, Alpenstrasse 15,**
**CH- 3510 Konolfingen (CH)**

## Description

La présente invention a pour objet un procédé de fabrication d'une gelée de soja en emballage hermétique, dans lequel on chauffe une suspension aqueuse de soja, agar-agar et sucre et on la laisse prendre en masse en refroidissant.

Il est connu d'utiliser l'agar-agar pour préparer une gelée de soja. En effet, parmi les hydrocolloides qui entreraient en ligne de compte plusieurs réagissent avec les protéines de soja et provoquent ainsi une floculation indésirable. L'agar-agar est pratiquement le seul hydrocolloide susceptible de se prêter à la préparation d'une gelée ferme de soja, à texture croquante, légère, aqueuse, homogène et lisse. Cependant, même avec l'agar-agar, les risques de floculation demeurent réels. Ceci rend problématique la fabrication industrielle d'une telle gelée et tout particulièrement la fabrication d'une gelée de soja à longue conservation conditionnée aseptiquement en emballage hermétique.

La présente invention a pour but de proposer un procédé de fabrication industriel d'une gelée de soja en emballage hermétique qui soit absolument fiable et qui écarte tout risque d'obtenir une texture imparfaite.

A cet effet, le procédé selon la présente invention est caractérisé par le fait que l'on prépare une suspension aqueuse contenant 3-10 % de solides du soja entier ou dégraissé, 0,2-0,7 % d'agar-agar et 0-12 % de saccharose, on stérilisela suspension par chauffage, on la prérefroidit jusqu'à 40-48°C, on la conditionne aseptiquement en emballage hermétique à 40-48°C et on la laisse prendre en masse par refroidissement dans l'emballage.

Dans le présent exposé, les pourcentages sont donnés systématiquement en poids.

Ce procédé permet effectivement d'assurer une production de gelée de soja de qualité irréprochable. Il est désormais possible de ne pas craindre l'apparition d'une texture floconneuse ou granuleuse tout en demeurant certain d'obtenir une texture suffisamment ferme.

On a constaté en effet qu'en conditionnant la gelée à une température supérieure à 48°C il se produit un début de floculation qui détériore immédiatement l'aspect de la gelée ainsi que la sensation qu'elle laisse dans la bouche quand on l'écrase avec la langue contre le palais. Cette sensation dans la bouche doit être absolument exempte d'une granulosité quelconque. La gelée doit être absolument lisse à la vue, à la coupe et à la dégustation. Ainsi, lorsqu'on la conditionne à une température supérieure à 48°C la gelée devient ponctuée de taches claires qui se détachent sur le fond blanc ivoire ou coloré uniforme et sa texture devient sableuse.

On a constaté également qu'en conditionnant la gelée à une température inférieure à 40°C on obtient une texture trop molle. On peut proposer comme explication de ce phénomène que la prise en masse est déjà trop avancée à ces températures. En intervenant physiquement par l'opération du conditionnement durant la prise en masse on gênerait le déroulement de la gélification qui ne pourrait plus conduire à une texture aussi ferme que lorsqu'elle n'est pas perturbée.

Pour mettre en oeuvre le présent procédé, on peut utiliser comme matière première des fèves de soja entières, dépelliculées ou non, des farines de soja dégraissées ou non, des concentrats ou des isolats de soja. En d'autres termes, le soja peut être utilisé sous toutes ses formes. Si l'on distingue dans le présent exposé entre solides du soja entier ou dégraissé, c'est pour souligner que l'on peut utiliser aussi bien les produits extrairs de la fève entière que ceux extraits des tourteaux ou de la farine dégraissée. On prépare donc une suspension contenant 3-10 % de ces solides. Ce domaine est centré sur des valeurs préférées de 4-7 % que l'on rencontre le plus souvent dans des produits de ce type dans leur contrée d'origine. Un domaine élargi à des valeurs plus faibles que 3 % ou plus élevées que 10 % conduit à des produits dont on pourrait craindre qu'ils ne présentent guère d'intérêt pour le consommateur parce que trop aqueux ou au contraire trop riches.

On incorpore à la suspension 0,2-0,7 % d'agar-agar, de préférence 0,40-0,65 %. On confère ainsi à la gelée la fermeté souhaitée. Cette fermeté peut être déterminée à l'aide d'un pénétromètre, à savoir un instrument qui mesure l'énergie nécessaire pour faire pénétrer un élément de forme définie dit plongeur dans la gelée à une certaine vitesse sur une certaine profondeur. Si l'on prend p. ex. un plongeur cylindrique dont l'extrémité plate présente un diamètre de 25,4 mm et qu'on le fait pénétrer dans le gel sur une profondeur de 4 mm à une vitesse de 0,2 mm/s, on peut dire que l'énergie nécessaire à cette pénétration doit être supérieure à environ $147 \times 10^{-5}$J pour la forme d'exécution préférée où la gelée présente une teneur en agar-agar comprise entre 0,40 et 0,65 %.

Dans une forme d'exécution du présent procédé, on incorpore en outre à la suspension aqueuse une toute petite quantité d'un autre hydrocolloide que l'agar-agar, notamment 0,02-0,06 % de xanthane ou 0,1-0,2 % de carraghénane. Cette adjonction éventuelle a pour but de réduire la synérèse qui peut se produire à l'entreposage ou surtout lorsqu''on découpe le produit avant de le servir, notamment pour le présenter en forme de dés à la manière chinoise.

Quant au saccharose, il est utilisé surtout pour ses qualités organoleptiques propres dans la présente invention. Il n'exerce pas une influence pratique déterminante sur la texture de la gelée si l'on reste dans les proportions indiquées. Au cas où l'on désire faire une gelée sans sucre, ceci est parfaitement possible. Mais on préfère en général utiliser du saccharose à raison de 6-12 %.

Pour préparer ladite suspension aqueuse, on peut d'une part mélanger à sec l'agar-agar et le saccharose ainsi que les éventuels xanthane ou carraghénane. On peut d'autre part mettre en solution ou suspension aqueuse lesdits solides du soja entier ou dégraissé de manière à obtenir un liquide homogène que l'on appellera présuspension de soja dans la suite du présent exposé. Comme indiqué plus haut, on peut partir de la fève, en réalisant directement l'"extraction aqueuse de manière connue de l'homme du métier et en séparant les insolubles p. ex. On peut aussi partir d'une farine de soja dégraissée et procéder de manière analogue. On peut enfin mettre simplement en solution ou suspension un concentrat ou un isolat. De préférence, si l'on désire obtenir une texture de gelée vraiment lisse à la coupe, on s''assure que la présuspension comporte des particules suffisamment fines et on l'homogénéise, le cas échéant, de manière qu'elle ne laisse aucune sensation sableuse sur la langue. Dans une forme d'exécution du présent procédé p. ex., on part des fèves de soja entières dépelliculées ou non et l'on procède de la manière décrite dans le brevet britannique No. 1553008. On peut ajouter alors à ladite présuspension de soja le mélange sec d'agar-agar et de saccharose et brasser vigoureusement le tout pour obtenir ladite suspension aqueuse.

On peut stériliser la suspension aqueuse par un chauffage rapide à haute température, p. ex. quelques s à 140°C ou quelques dizaines de s à 125°C. Le choix des conditions exactes de stérilisation n'a pas d'influence sur la qualité du produit final pour autant que le traitement thermique soit suffisant pour effectivement réaliser la stérilisation mais qu'il ne soit pas prolongé au-delà de ce qui est nécessaire.

Une fois stérilisée, la suspension est donc prérefroidie à une température de 40-48°C puis conditionnée aseptiquement à cette température en emballage hermétique. De manière générale, l'emballage devrait être de forme telle que la gelée puisse en être extraite d'un seul bloc intact. L'emballage peut être p. ex. du type briques en carton plastifié de divers formats, présentant notamment une contenance d'environ 1/4, 1/2 ou 1 litre. Comme indiqué plus haut, l'aspect critique des opérations de prérefroidissement et de conditionnement réside dans la fourchette des températures indiquées qu'il s'agit de contrôler très strictement.

Une fois conditionnée en emballage hermétique, la suspension se prend en masse en poursuivant son refroidissement dans l'emballage. Il est possible de laisser ce refroidissement s'opérer de lui-même par un entreposage adéquat. Mais il est essentiel de ne pas agiter les emballages et de les soustraire aux chocs tant que la température de la gelée n'est pas descendue à la température ambiante p. ex.

Les exemples ci-après sont présentés à titre d'illustration. Comme précisé plus haut, les pourcentages sont donnés en poids.

**Exemple 1**

Pour préparer une présuspension de soja, on broye dans l'eau à 90°C des fèves dépelliculées et prébrisées en quelques morceaux. On traite ensuite le broyat de soja et d'eau par injection de vapeur durant 40 s à 140°C puis on le refroidit à 80°C par détente. On le broye ensuite finement, on le passe au décanteur, on le clarifie et l'on obtient ladite présuspension de soja.

On mélange à sec du saccharose et de l'agar-agar et l'on ajoute ce mélange sec à la présuspension de soja tout en brassant vigoureusement pour obtenir ladite suspension aqueuse. Les quantités respectives des différents ingrédients sont calculées de manière que la suspension présente la composition suivante:

| | |
|---|---|
| Solides du soja | 4,5 % |
| Agar-agar | 0,6 % |
| Saccharose | 7,0 % |
| Eau | 87,9 % |

Dans un échangeur de chaleur à plaques, on stérilise la suspension à 140°C durant environ 5 s puis on la prérefroidit à 48°C. On la conditionne alors aseptiquement à 48°C en emballages hermétiques en carton plastifié qui présentent la forme de petites briques d'un quart de litre.

On transporte immédiatement les petites briques en un endroit prévu pour leur entreposage. La suspension se prend en masse dans l'emballage. On prélève des échantillons après 2 j, 1 mois, 3 mois et 6 mois. Toutes les gelées peuvent être sorties de l'emballage sous forme d'un bloc lisse compact. Les gelées sont fermes et l'on peut en prélever avec une cuillère des morceaux parfaitement lisses à la coupe. Leur texture apparaît également lisse dans la bouche, aucune irrégularité n'étant perceptible lorsqu'on écrase les morceaux entre la langue et le palais. Le goût est délicieux et ne s'altère pratiquement pas durant 3 mois. On ne perçoit qu'une très légère amertume après 6 mois. De même, la gelée présente une belle couleur blanc ivoire qui se maintient très longtemps et qui ne vire très légèrement au beige qu'après plus de 3 mois.

**Exemple 2**

On prépare une présuspension de soja de manière semblable à celle décrite à l'exemple 1, à l'exception du fait qu'on broye les fèves dans l'eau à 50°C et qu'on les traite par injection de vapeur à 110°C.

On mélange à sec du saccharose, de l'agar-agar, du xanthane et un arôme d'amande. On ajoute ce mélange à la présuspension en brassant vigoureusement. Les quantités des divers ingrédients sont calculées pour que la suspension ainsi obtenue présente la composition suivante:

| | | |
|---|---|---|
| Solides du soja | 4,5 % | |
| Agar-Agar | 0,5 % | |
| Saccharose | 8,8 % | |
| Xanthane | 0,05 % | |
| Arôme d'amande | 0,03 % | |
| Eau | 86,12 % | |

Dans un échangeur de chaleur à plaques, on stérilise la suspension à 125°C durant environ 60 s puis on la prérefroidit à 46°C. On la conditionne aseptiquement à 46°C en emballages hermétiques en carton plastifié présentant la forme de petites briques de 1/4 l. On transporte immédiatement les petites briques en un endroit prévu pour leur entreposage en les manipulant avec douceur. La suspension se prend en masse dans les emballages.

A la dégustation, la gelée présente les mêmes qualités que celles de la gelée décrite à l'exemple 1 à part le fait qu'elle présente un arôme d'amande qui supplante l'arôme relativement discret de la gelée "nature". On peut préparer de la même manière des gelées aromatisées à d'autres parfums tels que framboise, rose, noix de coco, melon, gula melaka ou pandan p. ex, et colorées.

En outre, l'addition de xanthane a fortement réduit la synérèse de la gelée qui se produit lorsqu'on sert la gelée découpée en dés. On peut obtenir la même réduction de la synérèse en utilisant p. ex. 0,15 % de carraghénane à la place du xanthane.

**Exemples 3-9 et comparatifs**

De manière semblable à celle décrite à l'exemple 1, on prépare diverses gelées en variant certains paramètres dont en particulier la température à laquelle on prérefroidit et on conditionne aseptiquement en emballage hermétique.

On obtient les résultats réunis dans le tableau ci-après. Dans la colonne intitulée "texture", un signe + indique que la texture est croquante, légère, aqueuse, homogène et lisse, et un signe - indique que la texture est endommagée par une floculation qui se traduit par des points blancs sur fond ivoire et une sensation de grain grossier dans la bouche. Dans la colonne intitulée "fermeté", on indique l'énergie nécessaire pour faire pénétrer un plongeur cylindrique à extrémité plate de 25,4 mm de diamètre à une vitesse de 0,2 mm/s sur une profondeur de 4 mm dans la gelée.

Les valeurs correspondantes pour les gelées des exemples 1 et 2 sont également indiquées dans ce tableau. A titre de comparaison, on indique aussi les résultats obtenus en conditionnant des gelées à des températures trop basses ou trop élevées.

4

| Ex. No. | Composition (%) | | | | Température de condition- nement (°C) | Texture | Fermeté (J x $10^{-5}$) |
|---|---|---|---|---|---|---|---|
| | soja | agar- agar | saccha- rose | xantha- ne | | | |
| 1 | 4,5 | 0,6 | 7 | --- | 48 | + | 170 |
| 2 | 4,5 | 0,5 | 8,8 | 0,05 | 46 | + | 156 |
| 3 | 6 | 0,5 | 7 | 0,05 | 45 | + | 161 |
| *Com. | 6,5 | 0,4 | 7 | 0,02 | 54 | - | pas mesuré |
| 4 | 6 | 0,5 | 7 | 0,05 | 40 | + | 152 |
| *Com. | 6 | 0,5 | 7 | 0,05 | 35 | + | 145 |
| *Com. | 4,5 | 0,6 | 7 | 0,05 | 32 | + | 131 |
| *Com. | 4,5 | 0,6 | 7 | --- | 34 | + | 145 |
| 5 | 4,5 | 0,6 | 8 | 0,05 | 47 | + | 180 |
| 6 | 4,5 | 0,6 | 8 | 0,05 | 47 | + | 178 |
| *Com. | 4,5 | 0,6 | 9 | --- | 50 | - | 178 |
| *Com. | 4,5 | 0,6 | 9 | 0,05 | 50 | - | 169 |
| 7 | 4,5 | 0,55 | 8 | 0,05 | 48 | + | 165 |
| 8 | 4,5 | 0,55 | 8 | 0,05 | 47 | + | 158 |
| 9 | 4,5 | 0,35 | 10 | 0,05 | 46 | + | pas mesuré |

* Comparatif

On voit sur ce tableau que plus on élève la température à laquelle on prérefroidit la gelée et on la conditionne aseptiquement en emballage hermétique, plus la fermeté de la gelée augmente. Mais au-delà de 48°C la floculation intervient.

Par contre, si l'on conditionne à une température inférieure à environ 40°C, on voit que pour des gelées présentant une teneur en agar-agar comprise dans la fourchette préférée de 0,40-0,65 % la fermeté chute au-dessous de environ 147 x $10^{-5}$J qui est considérée comme valeur inférieure limite pour cette forme d'exécution.

A l'exemple 9 on obtient une gelée plus molle quoique parfaitement prise en masse dont la texture présente une grande analogie avec la texture du tofu fah. Ce dernier est un type de caillé de soja très apprécié en Extrême-Orient et préparé en faisant coaguler un lait de soja avec du sulfate de calcium. Cette analogie rend la forme d'exécution illustrée à l'exemple 9 tout à fait intéressante. La criticalité de la fourchette de température de prérefroidissement et conditionnement demeure entière pour cette forme d'exécution.

Dans la composition de ces gelées, la différence entre le 100 % et la somme des composants indiqués équivaut à la teneur en eau.

**Revendications**

1. Procédé de fabrication d'une gelée de soja en emballage hermétique, dans lequel on chauffe une suspension aqueuse de soja, agar-agar et sucre et on la laisse prendre en masse en refroidissant, caractérisé par le fait que l'on prépare une suspension aqueuse contenant 3-10 % en poids de solides du soja entier ou dégraissé, 0,2-0,7 % en poids d'agar-agar et 0-12 % en poids de saccharose, on stérilise la suspension par chauffage, on la prérefroidit jusqu'à 40-48°C, on la conditionne aseptiquement en emballage hermétique à 40-48°C et on la laisse prendre en masse par refroidissement dans l'emballage.

2. Procédé selon la revendication 1, caractérisé par le fait que la suspension aqueuse contient en outre 0,02-0,06 % en poids de xanthane.

5

3. Procédé selon la revendication 1, caractérisé par le fait que la suspension aqueuse contient en outre 0,1-0,2 % en poids de carraghénane.

4. Procédé selon la revendication 1, caractérisé par le fait que la suspension aqueuse contient 4-7 % en poids de solides du soja entier, 0,40-0,65 % en poids d'agar-agar et 6-12 % en poids de saccharose.


**Patentansprüche**

1. Verfahren zur Herstellung eines Sojagelees in einer hermetischen Verpackung, in welchem eine wäßrige Suspension von Soja Agar Agar und Zucker erhitzt und diese unter Abkühlen erstarren gelassen wird, dadurch gekennzeichnet, daß man einewäßrige Suspension mit einem Gehalt an 3-10 Cew.-% Feststoffen von ganzer oder entfetteter Soja, 0,2-0,7 Gew.-% Agar-Agar und 0 bis 12 Gew.-%Saccharose bereitet, die Suspension durch Erhitzen sterilisiert, sie bis auf 40 bis 48°C vorkühlt, sie in einer hermetischen Verpackung bei 40 bis 48°C aseptisch konditioniert und sie durch Abkühlen in der Verpackung erstarren läßt.

2. Verfahren nach Anspruch 1, dadurch gekennzeichnet, daß die wäßrige Suspension zusätzlich 0,02 bis 0,06 Gew.-% Xanthan enthält.

3. Verfahren nach Anspruch 1, dadurch gekennzeichnet, daß die wäßrige Suspension zusätzlich 0,1 bis 0,2 Gew.-% Carragenan enthält.

4. Verfahren nach Anspruch 1, dadurch gekennzeichnet, daß die wäßrige Suspension 4 - 7 Gew.-% Feststoffe von ganzer Soja, 0,40 - 0,65 Gew.-% Agar-Agar und 6 - 12 Gew.-% Saccharose enthält.


**Claims**

1. A process for the production of a soya jelly in a hermetically sealed pack in which an aqueous suspension of soya, agar-agar and sugar is heated and allowed to set while cooling, comprising the steps of preparing an aqueous suspension containing 3-10 % by weight of whole or defatted soya solids, 0.2-0.7 % by weight of agar-agar and 0-12 % by weight of sucrose, sterilizing by heating the suspension thus prepared and then precooling it to 40-48°C, aseptically packing it in hermetically sealed containers at 40-48°C and allowing it to set by cooling in the containers.

2. A process as claimed in claim 1, wherein the aqueous suspension additionally contains 0.02-0.06 % by weight of xanthan.

3. A process as claimed in claim 1, wherein the aqueous suspension additionally contains 0.1-0.2 % by weight of carrageenan.

4. A process as claimed in claim 1, wherein the aqueous suspension contains 4-7 % by weight of whole soya solids, 0.40-0.65 % by weight of agar-agar and 6-12 % by weight of sucrose.